# EUROPÄISCHE PATENTSCHRIFT

(11) **EP 1 298 674 B1**
(45) Veröffentlichungstag und Bekanntmachung des Hinweises auf die Patenterteilung: **23.07.2008**
(21) Anmeldenummer: 02016167.5
(22) Anmeldetag: 20.07.2002
(51) Int. Cl.: G21C 3/34

(54) **Brennelement für einen Druckwasserreaktor**
Fuel assembly for a pressurized water reactor
Assemblage combustible pour un réacteur à eau sous pression

(30) Priorität: 19.09.2001 DE 10146128
(43) Veröffentlichungstag der Anmeldung: 02.04.2003
(73) Patentinhaber: AREVA NP GmbH, 91052 Erlangen (DE)
(72) Erfinder: Schmidt, Norbert, 96450 Coburg (DE); Rau, Peter, Dr., 91359 Leutenbach (DE); Herzog, Erika, 91475 Lonnerstadt (DE)
(74) Vertreter: Mörtel & Höfner

(56) Entgegenhaltungen:
- EP-A1- 0 054 236
- FR-A1- 2 452 765
- GB-A- 2 064 202
- US-A- 3 715 275
- US-A- 4 059 483

## Beschreibung

Die Erfindung betrifft ein Brennelement für einen Druckwasserreaktor. Zur lateralen Fixierung des Brennstabbündels eines Brennelementes sind über die Länge der Brennstäbe mehrere Abstandhalter verteilt angeordnet. An seiner Unterseite weist das Brennelement ein Fußstück auf, auf dessen Oberseite sich die Brennstäbe abstützen. Oberseits ist am Brennelement ein Kopfstück vorhanden. Wenn die Brennelemente in einem Reaktor-Druckbehälter eingebaut sind, sind sie zwischen einem unteren und einem oberen Kerngitter angeordnet, wobei von den Kerngittern Fixierstifte vorstehen, die in Bohrungen am Fuß- bzw. Kopfstück eingreifen. Die Kerngitter und auch die Kopf- und Fußteile bestehen in herkömmlicher Weise aus austenitischem Stahl. Für die Abstandhalter kommen hauptsächlich zwei Materialien zum Einsatz, nämlich ebenfalls austenitischer Stahl und Zircaloy, eine neben Zirkonium als Hauptbestandteil Zinn, Eisen, Chrom und optional Nickel enthaltende Legierung. Da austenitischer Stahl eine relativ hohe Neutronenabsorption aufweist, werden in aller Regel Abstandhalter aus Zircaloy eingesetzt. Die beiden Materialien weisen nun unterschiedliche Wärmedehnungen auf. Der Wärmeausdehnungskoeffizient von Zircaloy beträgt ca.5x10⁻⁶mm/mm°C während austenitische Stähle einen thermischen Ausdehnungskoeffizienten von ca.18x10⁻⁶mm/mm°C haben. Im Betrieb dehnen sich somit die Abstandhalter horizontal bzw. in Radialrichtung weniger aus als die Kerngitter, so dass sich zwischen den einzelnen Brennelementen vorhandenen Spalträume bei Erwärmung auf Betriebstemperatur vergrößern. Nachteilig dabei ist vor allem, dass sich der Freiheitsgrad für ein seitliches, etwa durch ungleichmäßige Druckverhältnisse hervorgerufenes Durchbiegen der Brennelemente vergrößert. Dabei kann es nicht nur zur Verbiegung eines einzelnen Brennelements, sondern aller Brennelemente einer Speiche, also aller sich in einer Linie zwischen der Innenwandung der Kernumfassung angeordneten Brennelemente kommen, so dass sich im mittleren Brennelementbereich durch Addition der vergrößerten Spalträume Abweichungen von 10-20 mm von der Solllage ergeben können. Bei derart verformten Brennelementen ist das Einfallen von Steuerstäben in die Führungsrohre behindert und gegebenenfalls eine Schnellabschaltung des Reaktors verzögert. Darüber hinaus ergibt sich eine Veränderung der ursprünglich vorhandenen Moderationsverhältnisse, was zu nicht erwünschten Leistungsänderungen führt.

Der Verbiege-Freiheitsgrad für ein Brennelement wird neben der unterschiedlichen Wärmeausdehnung zwischen Abstandhalter und Kerngitter noch durch zwei weitere Effekte vergrößert. Um den Reaktor sicher be- und entladen zu können wird zwischen den Brennelementen ein Beladespalt von ca.1 mm benötigt, d.h. die Kantenlänge bzw. die Schlüsselweite der Abstandhalter ist um diesen Betrag kleiner als das Teilungsmaß der Kerngitter. Ein weiterer spaltvergrößernder Effekt ergibt sich aus der Eigenschaft von Zircaloy, unter Neutronenbestrahlung zu wachsen. Das Wachstum kann sich dabei auch radial nach außen richten, so dass die Abstandhalter nach längerer Neutronenbestrahlung eine größere Schlüsselweite aufweisen als im Ausgangszustand. Nach längerer Betriebsdauer wird zwar im Betriebszustand die auf unterschiedliche Wärmeausdehnungskoeffizienten beruhende Spaltraumvergrößerung teilweise kompensiert. Im abgekühlten Entladezustand des Reaktors würde ein radial gewachsener Abstandhalter den Beladespalt verringern und das Herausnehmen auszutauschender Brennelemente behindern. Um dies zu vermeiden werden von vornherein Abstandhalter mit einer ihrem Wachstum entsprechenden Schlüsselweitenverringerung vorgesehen. Die Schlüsselweitenverringerung des Abstandshalters eines frischen Brennelements führt also in der anfänglichen Betriebsphase, in der ein merkliches Wachstum der Abstandhalter noch nicht stattgefunden hat, zu einer Vergrößerung der zwischen den Brennelementen vorhandenen Spalträume.

Zur Lösung der geschilderten Probleme wurde bisher der Weg beschritten, die Brennelementstruktur möglichst biegesteif auszuführen. Insbesondere wurde die Wanddicke der Steuerstabführungsrohre erhöht und die Verbindung zwischen den Führungsrohren und den Abstandhaltern verstärkt.

Aufgabe der Erfindung ist es, ein Brennelement mit einem Abstandhalter vorzuschlagen, der einer Vergrößerung des zwischen den in einem Reaktordruckbehälter eingebauten Brennelementen vorhandenen Spaltraums entgegenwirkt, ohne dass versteifende Maßnahmen an der Brennelementstruktur erforderlich sind.

Diese Aufgabe wird durch ein Brennelement mit den Merkmalen des Anspruches 1 gelöst. Danach ist wenigstens ein vorzugsweise in einem mittleren Bereich des Brennelements positionierter Abstandhalter aus einem ersten, in Bezug auf die Mittellängsachse des Brennelements radial außen liegenden und einem zweiten radial inneren Teil gebildet, wobei der zweite Teil aus Zircaloy und der erste Teil aus einem metallischen Material besteht, das gegenüber Zircaloy ein geringeres durch Neutronenstrahlung verursachtes Wachstum in Radialrichtung und einen größeren Wärmeausdehnungskoeffizienten aufweist. Gegenüber einem herkömmlichen, vollständig aus Zircaloy bestehenden Abstandhalter dehnt sich bei der vorgeschlagenen Ausgestaltung der außenliegende erste Abstandhalterteil bei Erwärmung auf Betriebstemperatur stärker aus, wodurch die Wärmedehnungsdifferenz zwischen Abstandhalter und Kerngitter im Vergleich zur herkömmlicher Bauweise verringert wird. Diese Verringerung ist um so ausgeprägter, je weiter sich der Ausdehnungskoeffizient des Materials des ersten Teils an den Wärmedehnungskoeffizienten des Kerngittermaterials annähert. Sofern nicht zwischen dem ersten und dem zweiten Teil von vornherein ein gewisses Spiel vorgesehen ist, bildet sich ein solches aufgrund der größeren Wärmedehnung des äußeren Teils. Ein durch Neutronenstrahlung hervorgerufenes radiales Wachstum des inneren Teils ist damit ermöglicht, ohne dass es zu einer radialen Aufweitung des äußeren Teils kommt. Das Wachstum des inneren Teils wirkt sich somit nicht auf die Schlüsselweite des Abstandhalters aus. Dementsprechend ist eine wachstumskompensierende, die Spalträume zwischen den Brennelementen vergrößernde Schlüsselweitenverringerung des Abstandhalters bei einem frischen Brennelement nicht erforderlich. Der anfängliche Spaltraum zwischen den Brennelementen kann somit auf den Beladespalt begrenzt werden. Spaltraumvergrößernd wirkt sich dann nur noch eine unterschiedliche Wärmedehnung zwischen den Kerngittern und dem äußeren Teil des Abstandhalters aus. Wenn jedoch dessen äußerer Teil aus dem gleichen Material wie die Kerngitter, nämlich vorzugsweise aus austenitischem Stahl besteht, findet eine erwärmungsbedingte Spaltraumvergrößerung nur in verringertem Ausmaß statt. Die Spalträume zwischen den Brennelementen sind somit auch bei Betriebstemperatur im Wesentlichen auf den Beladespalt begrenzt.

Bei einer ersten bevorzugten Ausführungsvariante sind der erste und der zweite Teil separate, nicht fest miteinander verbundene Teile. Um eine Fixierung des äußeren Teils an radial außen liegenden Steuerstabführungsrohren zu gewährleisten, sind an dessen Innenseite einzelne, für diesen Zweck vorgesehene Zellen angeordnet. Der zweite Teil ist dann an weiter innen liegenden Steuerstabführungsrohren fixiert. Eine Verbindung zwischen den beiden Teilen ist nicht erforderlich.

Bei einer zweiten bevorzugten Ausführungsform ist der zweite Teil aus kreuzweise ineinander gesteckten Stegen gebildet, wobei sich mehrere dieser Stege aus zwei Teilstegen zusammensetzt, die in Axialrichtung voneinander getrennt sind, die also zwischen sich einen sich über die gesamte Steglänge erstreckenden Zwischenraum freilassen. In diesen Zwischenräumen ist jeweils ein aus dem Material des ersten Teils bestehender Dehnungssteg angeordnet, der mit seinen Enden an der Innenseite des ersten Teils fixiert ist. Durch diese Ausgestaltung ist der erste Teil mit dem zweiten Teil mechanisch verbunden. Die Dehnungsstege sind so bemessen, dass eine Relativbewegung zwischen ihnen und den Teilstegen möglich ist. Bei Erwärmung auf Betriebstemperatur dehnen sich die Dehnungsstege und der mit ihnen verbundene erste Teil aus, so dass die durch die Wärmedehnung der Kerngitter hervorgerufene Vergrößerung des Spaltes zwischen den Brennelementen zumindest teilweise kompensiert wird. Um möglichst wenig neutronenabsorbierendes Material, insbesondere austenitischen Stahl für den ersten Teil zu verwenden, ist vorzugsweise vorgesehen, dass der erste Teil ein nur aus Randstegen gebildeter Rahmen ist. Dieser Rahmen ist zwar über die in das Gitter des zweiten Teils eingeflochtenen Dehnungsstege mit diesem verbunden. Jedoch um die mechanische Stabilität des Abstandhalters weiter zu erhöhten, ist ein Teil der Stege und Teilstege mit ihrem Endbereich mittels einer in Längsrichtung des jeweiligen Randsteges wirksamen Formschlussverbindung gegen seitliches Verkippen am ersten Teil gesichert. Diese Art der Verbindung zwischen Stegen bzw. Teilstegen und Rahmen lässt eine Relativbewegung zwischen Stegen bzw. Teilstegen und Rahmen in Steglängsrichtung zu. Der Rahmen kann sich somit bei Erwärmung auf Betriebstemperatur ungehindert ausdehnen.

Die Erfindung wird nun anhand von in den beigefügten Zeichnungen dargestellten Ausführungsbeispielen näher erläutert. Es zeigen:
- Fig.1: einen schematischen Längsschnitt eines Reaktordruckbehälters,
- Fig.2: ein Brennelement eines Druckwasserreaktors,
- Fig.3: die beiden Teile eines ersten Ausführungsbeispiels eines Abstandhalters in schematischer Perspektivansicht,
- Fig.4: eine schematische Perspektivdarstellung des Abstandhalters nach Fig.3 in zusammengesetztem Zustand,
- Fig.5: die beiden Teile eines weiteren Ausführungsbeispieles eines Abstandhalters in schematischer Perspektivansicht,
- Fig.6: den Abstandhalter nach Fig.5 in zusammengesetztem Zustand,
- Fig.7: eine Variante des Abstandhalters nach Fig.6,
- Fig.8: einen Ausschnitt des Abstandhalters nach Fig.6,
- Fig.9: einen Ausschnitt eines Abstandhalters mit darin angeordneten Stäben und Steuerstabführungsrohren in Draufsicht und
- Fig.10: eine Abbildung, die die Spaltraumgegebenheiten bei herkömmlichen und erfindungsgemäßen Brennelementen verdeutlicht.

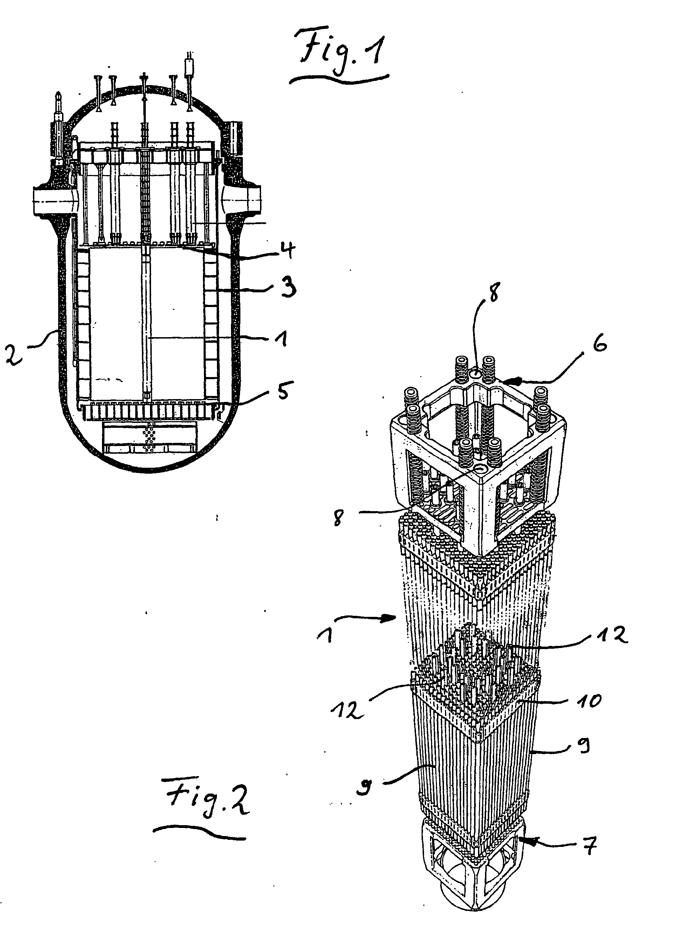

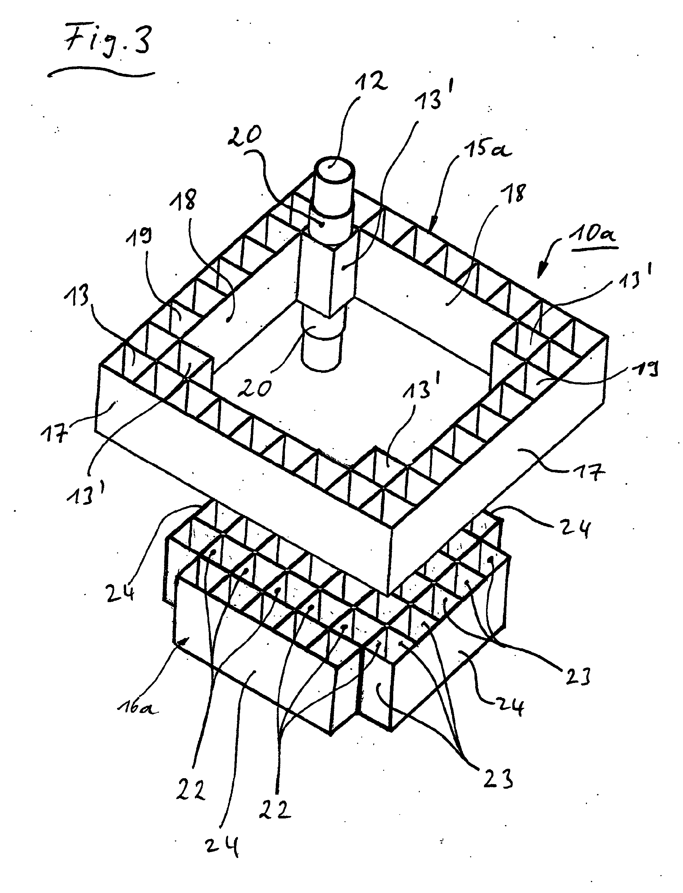

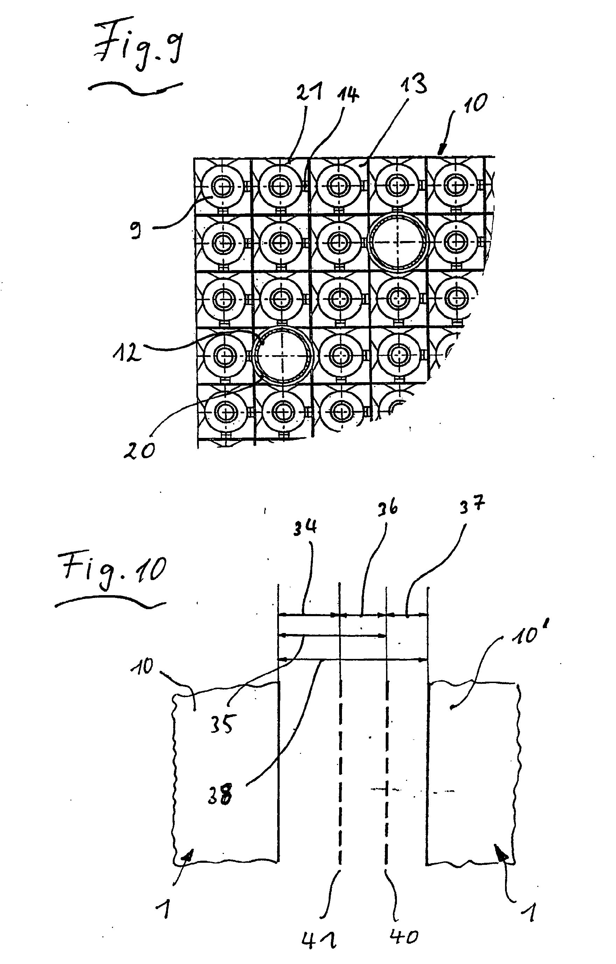

Wie Fig.1 zu entnehmen ist, sind die Brennelemente 1 eines Druckwasserreaktors innerhalb einer im Reaktordruckbehälter 2 angeordneten Kernumfassung 3 zwischen einem oberen und einem unteren Kerngitter 4,5 angeordnet. An den Brennelementen sind oberseits ein Kopfteil 6 und unterseits ein Fußteil 7 vorhanden, deren einander abgewandte Stirnseiten vier eckständige Bohrungen 8 aufweisen (Fig.2). In zwei sich diagonal gegenüberstehenden Bohrungen 8 ragen von den Kerngittern 4,5 vorstehende Zentrierstifte (nicht dargestellt). Die Brennstäbe 9 eines Brennelements 1 bzw. eines Brennstabbündels sind lateral durch Abstandhalter 10 fixiert. Das Brennelement umfasst weiterhin mehrere Steuerstabführungsrohre 12. Die Abstandhalter wie auch die gesamte Außenkontur des Brennelements haben im wesentlichen einen quadratischen Querschnitt und weisen eine Vielzahl von Zellen 13 auf, beispielsweise 18 x 18 wie in Fig. 2 oder 9 x 9 wie in Fig. 3, die von den Brennstäben 9 bzw. Steuerstabführungsrohren 12 durchsetzt sind. Zur Fixierung der Brennstäbe ragen von den Zellenwänden Noppen 14 und Federn 21 nach innen vor (Fig.9).

Die in Fig.3-7 dargestellten Abstandhalter 10a,10b,10c weisen zwei unterschiedliche Teile, nämlichen einen radial außenliegenden ersten Teil 15a,15b,15c und einen von diesem umfassten inneren Teil 16a,16b,16c auf. Der erste Teil ist aus dem gleichen Material wie die Kerngitter 4,5, nämlich aus austenitischem Stahl und der zweite Teil aus Zircaloy gefertigt. Bei allen Abstandhaltern haben die Zellen 13 einen im wesentlichen quadratischen Querschnitt.

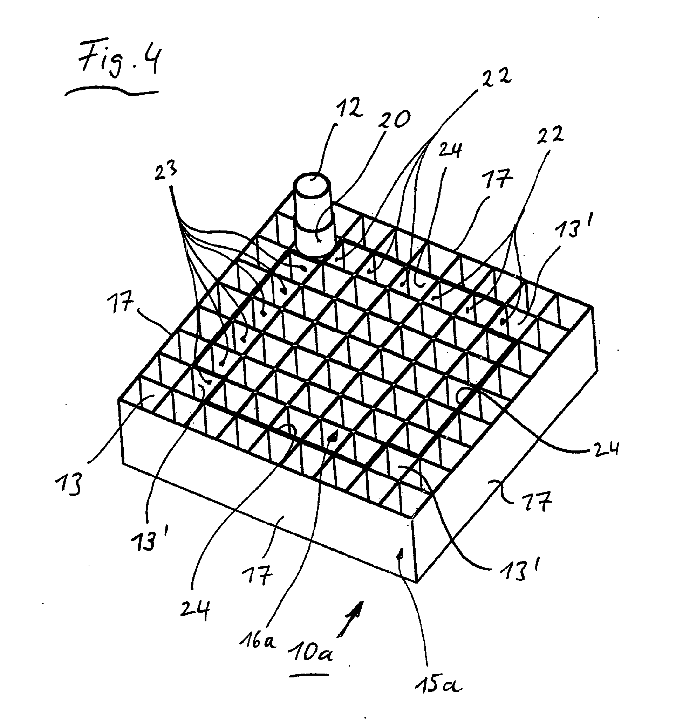

Bei dem Abstandhalter 10a (Fig.3,4) ist der erste Teil 15a aus einer einzigen, ein Quadrat bildenden Zellenreihe gebildet. Außen ist der Teil 15a von vier Randstegen 17 und innen von vier Innenstegen 18 umgrenzt. Die Trennwände zwischen den Zellen 13 sind von Stegen 19 gebildet, die sich jeweils rechtwinklig zu zwei einander zugeordneten Rand- und Innenstegen 17,18 erstrecken. In den Innenecken des Teils 15a ist jeweils eine Zelle 13' angeordnet, mit denen der Teil 15a an vier Steuerstabführungsrohren 12 (in Fig.3 u.4 ist jeweils nur eines dargestellt) fixiert ist. Zu diesem Zweck sind an den Steuerstabführungsrohren 12 radial erweiterte Bereiche 20 vorhanden, die mit der Zelle 13' bzw. den sie umgrenzenden Stegen einen axial wirksamen Hinterschnitt bilden. Der zweite Teil 16a des Abstandhalters 10a setzt sich aus jeweils sechs Längsstegen 22 und sechs Querstegen 23 zusammen, die kreuzweise ineinander gesteckt sind und deren Länge sieben Zellenbreiten entspricht. An die Stirnkanten der Stege 22 und 23 sind jeweils Randstege 24 angesetzt, die um zwei Zellenbreiten kürzer sind als die Längs- und Querstege 22,23. Es entsteht so insgesamt ein Gebilde, das den Innenraum des ersten Teils 15a ausfüllt. Die beiden Teile 15a,16a können passgenau oder mit einem geringen Spiel ineinander gesetzt sein.

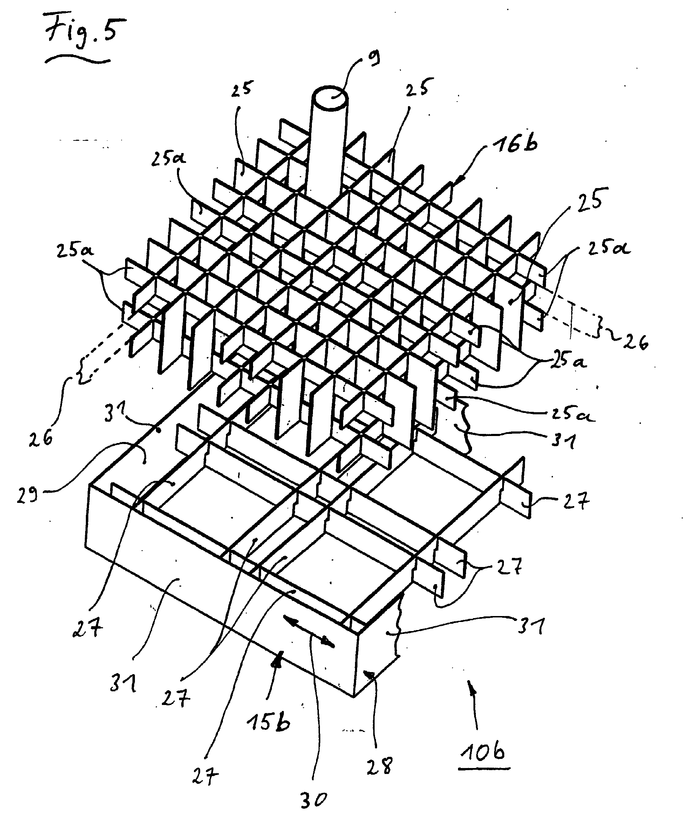

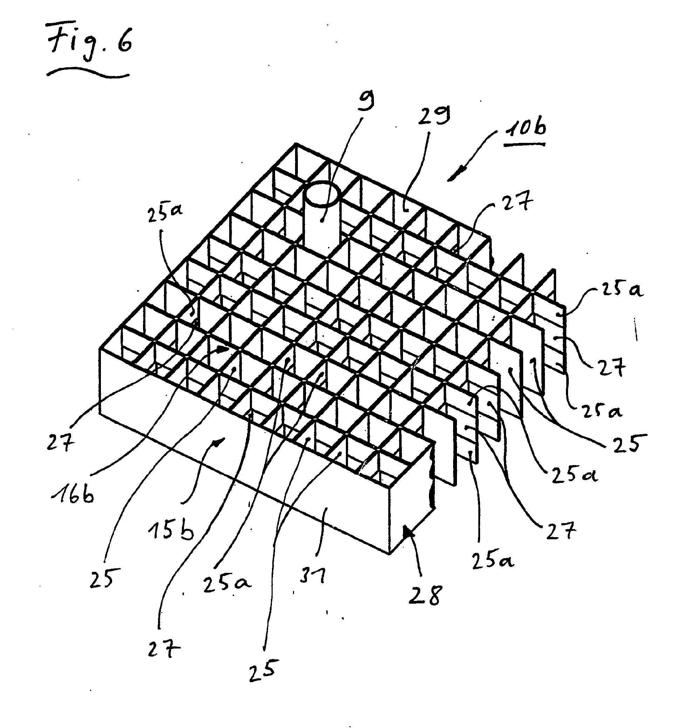

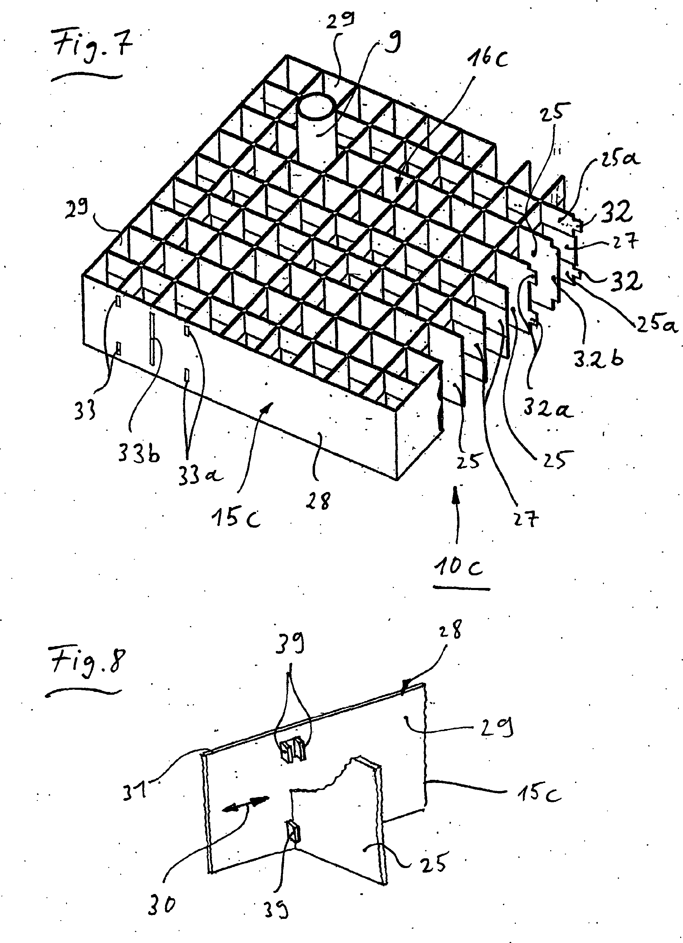

Bei dem Abstandhalter 10b gemäß Fig.5 u.6 setzt sich der innere Teil 16b, ähnlich wie bei dem Ausführungsbeispiel nach Fig.3,4 aus kreuzweise ineinander gesteckten Stegen 25 aus Zircaloy zusammen. Die Stege 25 haben allesamt die gleiche Länge, der Teil 16b ist somit im wesentlichen von quadratischer Querschnittsform. Jeweils die zwei mittleren und die zwei äußeren Stege sind von zwei Teilstegen 25a gebildet, die zwischen sich einen Zwischenraum 26 freilassen. In die Zwischenräume 26 ist jeweils ein Dehnungssteg 27 aus austenitischem Stahl eingesetzt und mit seinen Stirnseiten mit dem ersten Teil 15b verlötet. Der erste bzw. äußere Teil 15b ist ein aus Randstegen 31 gebildeter Rahmen 28, der im Montagezustand (Fig.6) den innenliegenden zweiten Teil 16b umfasst. Die Stege 27 können gleichlang wie die Stege 25 oder etwas länger als diese sein, im letzteren Fall entsteht dann ein geringes Spiel zwischen den Stirnrändern der Stege 25 und der Innenseite 29 des Rahmens 28. Um die Stabilität des Abstandhalters 10b zu erhöhen, können die Stege 27 mit ihrem Endbereich mittels einer in Längsrichtung 30 des jeweiligen Randstegs 31 des Rahmens 28 wirksamen Formschlussverbindung gegen seitliches Verkippen am ersten Teil 15b gesichert sein. Dies kann beispielsweise durch eine oder mehrere an den Stirnrand aller oder eines Teils der Stege 25,25a angeformte Laschen 32 bewerkstelligt werden, die sich in entsprechend ausgestaltete Schlitze 33 im Rahmen 28 hineinerstrecken. Zwischen den Laschen 32 und den Rändern der Schlitze 33 ist ein Spiel vorhanden, damit sich der Rahmen 28 bei Erwärmung ungehindert aufweiten kann. Weiterhin ist es denkbar, dass an einem Steg 25 zwei zueinander beabstandete Laschen 32a oder eine sich über einen größeren Höhenbereich des Stegs 25 erstreckende Lasche 32b vorhanden sind, wobei diese Laschen mit entsprechend ausgestalteten Schlitzen 33a,33b im Rahmen 28 zusammenwirken. Eine andere Möglichkeit einer formschlüssigen Verbindung zwischen dem Teil 16b und dem Rahmen 28 ist in Fig.8 gezeigt. An der Innenseite 29 des Rahmens 28 sind in Steglängsrichtung 30 beabstandete Vorsprünge 39 vorhanden, die den Stirnrandbereich eines einteiligen Steges 25 mit Spiel zwischen sich einschließen. Durch das Spiel ist ein behinderungsfreies Aufweiten des Rahmens 28 gewährleistet. Beim Beispiel nach Fig.8 sind die Vorsprünge im Bereich des oberen und unteren Randes des Rahmens 28 positioniert und sind durch eine Stanzung und anschließendem Umbiegen nach innen erzeugt.

Beim Beladen eines Reaktordruckbehälters 2 bzw. der Kernumfassung 3 mit Brennelementen 1 ist zur Gewährleistung eines sicheren Beladens und späteren Entladens zwischen den Brennelementen ein sog. Beladespalt 34 (Fig.10) von etwa 1mm erforderlich. Dieser Spalt würde sich bei Verwendung herkömmlicher Abstandhalter aus Zircaloy dadurch verringern, dass dieses Material durch Neutronenbestrahlung wächst. Dieses Wachstum vollzieht sich herstellungsbedingt in Längsrichtung der Stege des Abstandhalters, d.h. dieser weitet sich auf. Wenn somit nach längerer Betriebsdauer ein Brennelement ausgetauscht werden muss, wäre der Beladespalt 34 um einen dem Materialwachstum des Abstandhalters entsprechenden Betrag verringert. Das Materialwachstum wird nun herkömmlicherweise von vornherein durch eine entsprechend verringerte Schlüsselweite (bzw. Kantenlänge) der Abstandhalter 10,10' berücksichtigt. Zum Zeitpunkt der Beladung ist somit zwischen zwei benachbarten herkömmlichen Abstandhaltern 10,10' ein Spalt 35 vorhanden, der sich aus dem geforderten Beladespalt 34 und einem das Materialwachstum berücksichtigenden Kompensationsspalt 36 zusammensetzt. In Fig.10, die die Spaltraumverhältnisse nicht maßstabsgetreu wiedergibt, ist der entsprechende Abstand des Abstandhalters 10' zum Abstandhalter 10 durch die gestrichelte Linie 40 angedeutet. Die gestrichelte Linie 41 zeigt die Position des Abstandhalters 10' für einen Zustand, bei dem der Spaltraum auf den Beladespalt 34 begrenzt ist. Im Betrieb herrschen Temperaturen im Bereich von 250°C. vor. Bei Erwärmung auf die Betriebstemperatur dehnen sich die die Brennelemente 1 haltenden Kerngitter 4,5 und die Kernumfassung 3 aus. Aufgrund der unterschiedlichen Wärmedehnungen zwischen den Kerngittern 4,5 und herkömmlichen Abstandhaltern - austenitische Stähle haben einen thermischen Ausdehnungskoeffizienten von ca. 18*10⁻⁶ mm/mm°C, Zircaloy dagegen nur von ca. 5*10⁻⁶ mm/mm°C - vergrößert sich der im Beladezustand vorhandene Spalt 35 nochmals nämlich um einen Dehnungsspalt 37. Der bei den genannten hohen Temperaturen vorhandene Betriebsspalt 38 ist somit erheblich größer als der Beladespalt 34. Wird nun die gesamte Brennelementanordnung bzw. eine sich zwischen den Wänden der Kernumfassung 3 linear erstreckende Reihe oder Speiche von Brennelementen etwa aufgrund von Druckunterschieden in dem mit sehr hoher Strömungsgeschwindigkeit fließenden Kühlwasser einseitig belastet, können die einzelnen Brennelemente wegen des zwischen ihnen vorhandenen, relativ breiten Spaltes 38 verbogen werden, wobei sich durch Summierung Spalträume von 10-20 mm bilden können. Nachteilig dabei ist, dass sich in den entsprechenden Bereichen die einen Brennstab umgebende Wassermenge vergrößert, wobei sich die Moderation und dementsprechend die Leistung erhöht. Diese Leistungserhöhung ist aber bei der Auslegung der Brennstäbe nicht berücksichtigt, so dass in den genannten Bereichen die Gefahr einer Überschreitung der Siedeübergangsleistung besteht. Nachteilig ist weiterhin, dass aufgrund der großen Verbiegungen das Einfallen der Steuerstäbe in ihre Führungsrohre behindert und damit eine Schnellabschaltung des Reaktors verzögert wird. Bei mit den beschriebenen Abstandhaltern ausgerüsteten Brennelementen ist ein solches Verbiegen nur in geringerem Ausmaß möglich. Dadurch, dass der radial außen liegende Teil des Abstandhalters 10 aus dem austenitischem Stahl der Kerngitter 4,5 gefertigt ist, dehnt er sich bei Erwärmung in gleichem Maße wie die Kerngitter 4,5 horizontal aus. Der Dehnungsspalt 37 ist somit gegenüber der herkömmlichen Bauweise mit Abstandhaltern, die vollständig aus Zircaloy bestehend verringert. Der Nachteil, dass austenitische Stähle eine größere Neutronenabsorption aufweisen als Zircaloy und dementsprechend die Neutronenökonomie verschlechtern, kann dadurch gemildert werden, dass die in Rede stehenden Abstandhalter nur im mittleren Bereich der Brennelemente eingesetzt werden. Hier kann sogar ein einziger Abstandhalter dieser Art ausreichend sein.

Der innenliegende zweite Teil 16a,b des Abstandhalters weist zwar nach wie vor ein Materialwachstum auf. Dieses wirkt sich aber nur auf das jeweilige Brennelement selbst aus. Der innere Teil 16a,b wächst nämlich in Radial- bzw. in Horizontalrichtung in den zwischen ihm und dem äußeren Teil 15a,b zumindest im Betriebszustand vorhandenen Spalt hinein. Sofern ein solcher Spalt nicht von vornherein vorgesehen ist, entsteht er dadurch, dass sich der aus austenitischem Stahl bestehende äußere Teil 15a,b stärker ausdehnt als der innere Teil 16a,b. Insgesamt beschränkt sich somit der im Betriebszustand vorhandene Spaltraum im Wesentlichen auf den Beladespalt 34. Eine Verbiegung eines Brennelements oder einer ganzen Brennelementreihe ist daher nur in geringerem Ausmaß möglich als bei herkömmlicher Bauweise.

### Bezugszeichenliste

- 1: Brennelement
- 2: Reaktordruckbehälter
- 3: Kernumfassung
- 4: oberes Kerngitter
- 5: unteres Kerngitter
- 6: Kopfteil
- 7: Fußteil
- 8: Bohrung
- 9: Brennstab
- 10: Abstandhalter
- 12: Steuerstabführungsrohr
- 13: Zelle
- 14: Noppe
- 15: erster Teil
- 16: zweiter Teil
- 17: Randsteg
- 18: Innensteg
- 19: Steg
- 20: Bereich
- 21: Feder
- 22: Steg
- 23: Steg
- 24: Randsteg
- 25: Steg
- 25a: Teilsteg
- 26: Zwischenraum
- 27: Dehnungssteg
- 28: Rahmen
- 29: Innenseite
- 30: Längsrichtung

- 31: Randsteg
- 32: Lasche
- 33: Schlitz
- 34: Beladespalt
- 35: Spalt
- 36: Kompensationsspalt
- 37: Dehnungsspalt
- 38: Betriebsspalt
- 39: Vorsprung
- 40: gestrichelte Linie
- 41: gestrichelte Linie

## Patentansprüche

1. Brennelement für einen Druckwasserreaktor mit in Zellen (13) von Abstandhaltern (10) lateral gehaltenen Brennstäben (9) und Steuerstabführungsrohren (12) und einem Kopf- und Fußstück (6,7), mit denen es innerhalb eines Reaktordruckbehälters an einem oberen bzw. unteren Kerngitter (4,5) fixiert ist,
**dadurch gekennzeichnet,**
**dass** wenigstens ein Abstandhalter (10) einen in Bezug auf die Mittellängsachse des Brennelements radial außen liegenden ersten Teil (15) und einen von diesem vollständig umfassten radial innen liegenden zweiten Teil (16) aufweist, wobei der zweite Teil (16) aus Zircaloy und der erste Teil (15) aus einem metallischen Material besteht, das gegenüber dem Zircaloy des zweiten Teils (16) ein geringeres durch Neutronenstrahlung verursachtes Wachstum in Radialrichtung und einen größeren Wärmeausdehnungskoeffizienten aufweist.

2. Brennelement nach Anspruch 1,
**dadurch gekennzeichnet,**
**dass** der erste Teil (15) aus dem gleichen Material besteht wie die Kerngitter (4,5).

3. Brennelement nach Anspruch 1 oder 2,
**dadurch gekennzeichnet,**
**dass** der erste Teil (15) aus austenitischem Stahl besteht.

4. Brennelement nach einem der Ansprüche 1 bis 3,
**dadurch gekennzeichnet,**
**dass** der wenigstens eine Abstandhalter (10) im mittleren Bereich des Brennelements angeordnet ist.

5. Brennelement nach einem der Ansprüche 1 bis 4,
**dadurch gekennzeichnet,**
**dass** der erste und der zweite Teil separate Teile sind, wobei an der Innenseite des ersten Teils (15a) einzelne jeweils an einem radial außenliegenden Steuerstabführungsrohr axial fixierte Zellen (13') angeordnet sind.

6. Brennelement nach einem der Ansprüche 1 bis 4,
**dadurch gekennzeichnet,**
**dass** der zweite Teil (16b) aus kreuzweise ineinandergesteckten Stegen (25) gebildet ist, wobei sich mehrere dieser Stege aus zwei Teilstegen (25a) zusammensetzen, welche zwischen sich einen sich über die gesamte Steglänge erstreckenden Zwischenraum (26) freilassen, in den ein aus dem Material des ersten Teils (15b) bestehender Dehnungssteg (27) angeordnet ist, der mit seinen Enden an der Innenseite (29) des ersten Teils (15b) fixiert ist.

7. Brennelement nach Anspruch 6,
**dadurch gekennzeichnet, dass** der erste Teil (15b) ein aus Randstegen gebildeter Rahmen (28) ist.

8. Brennelement nach Anspruch 7,
**dadurch gekennzeichnet,**
**dass** zumindest ein Teil der Stege (25) und der Teilstege (25a) mit ihrem Endbereich mittels einer in Längsrichtung (30) des jeweiligen Randstegs wirksamen Formschlussverbindung gegen seitliches Verkippen am ersten Teil (15c) gesichert ist.

## Claims

1. Fuel assembly for a pressurized-water reactor, having fuel rods (9) held laterally in cells (13) of spacers (10), and control rod guide tubes (12) and a headpiece and a foot piece (6, 7), by means of which it is fixed inside a reactor pressure vessel to an upper and lower core grid (4, 5), respectively, **characterized in that** at least one spacer (10) has a first part (15), which lies on the radially outer side with respect to the longitudinal center axis of the fuel assembly, and a second part (16), which lies on the radially inner side and is completely surrounded by the first part, the second part (16) consisting of Zircaloy and the first part (15) consisting of a metallic material which, compared to the Zircaloy of the second part (16), has a lower growth in the radial direction caused by neutron radiation and a higher coefficient of thermal expansion.

2. Fuel assembly according to Claim 1, **characterized in that** the first part (15) consists of the same material as the core grids (4, 5).

3. Fuel assembly according to Claim 1 or 2,
**characterized in that** the first part (15) consists of austenitic steel.

4. Fuel assembly according to one of Claims 1 to 3, **characterized in that** the at least one spacer (10) is arranged in the central region of the fuel assembly.

5. Fuel assembly according to one of Claims 1 to 4, **characterized in that** the first and second parts are separate parts, individual cells (13'), which are each axially fixed to a radially outer control rod guide tube, being arranged on the inner side of the first part (15a).

6. Fuel assembly according to one of Claims 1 to 4, **characterized in that** the second part (16b) is formed from webs (25) which are fitted crosswise into one another, a plurality of these webs being composed of two partial webs (25a) which between them leave clear a space (26) which extends over the entire web length and in which an expansion web (27), which consists of the material of the first part (15b) and has its ends fixed at the inner side (29) of the first part (15b), is arranged.

7. Fuel assembly according to Claim 6, **characterized in that** the first part (15b) is a frame (28) formed from edge webs.

8. Fuel assembly according to Claim 7, **characterized in that** the end region of at least some of the webs (25) and of the partial webs (25a) is secured against lateral tilting at the first part (15c) by means of a positively locking connection which is active in the longitudinal direction (30) of the corresponding edge web.

## Revendications

1. Elément de combustible pour un réacteur à eau pressurisée, avec des barres de combustible (9) maintenues latéralement dans des cellules (13) par des écarteurs (10), ainsi qu'avec des tubes de guidage de barre de commande (12) et un élément de tête et un élément de pied (6, 7), au moyen desquels il est fixé à une plaque à grille du coeur supérieure ou à une plaque à grille du coeur inférieure (4, 5) à l'intérieur de la cuve sous pression du réacteur,
**caractérisé en ce que**
au moins un écarteur (10) comporte une première partie (15) s'étendant radialement vers l'extérieur par rapport à l'axe longitudinal médian de l'élément de combustible, ainsi qu'une deuxième partie (16) s'étendant radialement vers l'intérieur, qui est entièrement encerclée par la première partie, la deuxième partie (16) étant constituée de Zircaloy et la première partie (15) étant constituée d'un matériau métallique, dont la croissance causée par les radiations neutroniques est inférieure par rapport au Zircaloy de la deuxième partie (16), et dont le coefficient de dilatation thermique est supérieur.

2. Elément de combustible selon la revendication 1,
**caractérisé en ce que**
la première partie (15) est constituée du même matériau que les plaques à grille du coeur (4, 5).

3. Elément de combustible selon les revendications 1 ou 2,
**caractérisé en ce que**
la première partie (15) est constituée d'acier austénitique.

4. Elément de combustible selon l'une des revendications 1 à 3,
**caractérisé en ce que**
l'au moins un écarteur (10) est disposé dans la région médiane de l'élément de combustible.

5. Elément de combustible selon l'une des revendications 1 à 4,
**caractérisé en ce que**
la première et la deuxième partie sont des parties séparées, des cellules (13') individuelles, dont chacune est fixée axialement à un tube de guidage de barre de commande situé radialement à l'extérieur, sont disposées sur un côté intérieur de la première partie (15a).

6. Elément de combustible selon l'une des revendications 1 à 4,
**caractérisé en ce que**
la deuxième partie (16b) est formée par des nervures (25) emboîtées les unes dans les autres comme des croix, plusieurs de ces nervures étant composées de deux nervures partielles (15a) laissant libre entre elles un espace intermédiaire (26) s'étendant sur toute la longueur de nervure, dans lequel est disposée une nervure d'extension (27) constituée du même matériau que la première partie (15b), qui est fixée au côté intérieur (29) de la première partie (15b) par ses extrémités.

7. Elément de combustible selon la revendication 6,
**caractérisé en ce que**
la première partie (15b) est un cadre (28) formé par des nervures de bord.

8. Elément de combustible selon la revendication 7,
**caractérisé en ce que**
au moins une partie des nervures (25) et des nervures partielles (25a) est sécurisée contre un pivotement latéral sur la première partie (15c), par leurs extrémités, au moyen d'une liaison par complémentarité de forme agissant dans le sens longitudinal (30) de chacune des nervures de bord.
